# EUROPÄISCHE PATENTSCHRIFT

(11) **EP 2 468 935 B1**
(45) Veröffentlichungstag und Bekanntmachung des Hinweises auf die Patenterteilung: **08.03.2017**
(21) Anmeldenummer: 12159078.0
(22) Anmeldetag: 22.03.2006
(51) Int. Cl.: D04H 1/42

(54) **VLIES, GEWEBE, FASCHINE MIT BZW. AUS BRAUNKOHLESTÄMMIGEN FASERSTOFFEN**
NON-WOVEN FABRIC, TISSUE, FASCINE COMPRISING OR CONSISTING OF LIGNIT FIBROUS MATERIAL
ÉTOFFE, TISSU, FASCINE COMPRENANT OU CONSTITUÉE DE MATIÈRES FIBREUSES À BASE DE LIGNITE

(30) Priorität: 23.03.2005 DE 102005014035
(43) Veröffentlichungstag der Anmeldung: 27.06.2012
(62) Teilanmeldung aus: 06723637.2
(73) Patentinhaber: A. H. Meyer Maschinenfabrik GmbH, 27239 Twistringen (DE)
(72) Erfinder: Spyra, Wolfgang, 13467 Berlin (DE); Schaks, Hans-Ulrich, 01983 Allmosen (DE); Roess, Thomas, 27239 Twistringen (DE); Noack, Michael, 01983 Grossräschen (DE); Biegel, Anita, 01968 Senftenberg (DE)
(74) Vertreter: Eisenführ Speiser

(56) Entgegenhaltungen:
- WO-A1-99/47764
- DE-A1- 4 231 100
- DE-A1- 10 123 903
- DE-A1- 19 722 324
- GB-A- 2 252 553
- US-A- 5 471 786

## Beschreibung

Die Erfindung betrifft ein Gewebe, Vlies, schlauchartiger Körper, Faschine, Matte, oder Wattekörper aus braunkohlestämmigen Fasern, insbesondere faserigem Xylit, also ein Produkt, welches durch eine Struktur gekennzeichnetes Material in zwei- und dreidimensionaler Ausdehnung aufweist. Darunter wird gemäß vorliegender Anmeldung jedwede Ausbildung von Schicht verstanden, bei welcher die Schicht durch Fasern gebildet wird, wobei jedoch nicht unbedingt eine lineare Ausbildung der Schicht gegeben sein muss, sondern die Schicht auch dreidimensional ausgebildet sein kann, um somit eine bestimmte Form, z.B. Topf, Scheibe, u.s.w. zu bilden. Die Flächen und Körper können auch unsymmetrisch ausgebildet sein. Soweit in der vorliegenden Anmeldung der Begriff "Schicht" verwendet wird, sind darunter auch Schichtfolgen zu verstehen. Soweit nachfolgend der Begriff "Xylit" verwendet wird, ist darunter "jede Art an braunkohlestämmigen Faserstoffen, insbesondere jedoch fasriger Xylit" zu verstehen. Beispiele in diesem Sinne könnten Fasern sein, die durch eine spezielle Behandlung mit Braunkohle vergleichbare Eigenschaften wie Xylit erlangen.

Es ist bereits bekannt, verschiedenste Kunststoff- und Pflanzenfasern für solche Vliese und Gewebe einzusetzen. Beispielhaft für Pflanzenfasern seien erwähnt Kokosfasern, Flachs- oder Hanffasern als Schichtmaterial zur Bildung von Gewebe, Vlies, Matten oder dergl. in den verschiedensten Anwendungsgebieten.

Kunststofffasern werden in einer aufwendigen Technologie unter hohem Energieeinsatz hergestellt. Vorteile der Kunststofffasern können in ihrer Langlebigkeit unter anaeroben und aeroben Bedingungen bestehen. Ein biologischer Abbau des Gewebes mit hinreichender Geschwindigkeit findet nicht statt, was in vielfältigen Einssatzgebieten aufwendige Entsorgung erfordert und nachteilig wirkt.

Die bislang bekannten Fasermaterialen stammen aus dem Anbau von Pflanzen und die Fasern werden ohne umfangreiche Stoffumwandlungsprozesse direkt aus den Pflanzen selbst gewonnen oder zusammen mit ganzen Pflanzenbestandteilen (z. B. Stängel) verarbeitet, um dann das gewünschte Vlies, Gewebe, die Matte oder dergl. zu bilden.

Der Vorteil von solchen bekannten Pflanzenfasern besteht darin, dass sie aus biologisch abbaubaren Materialien bestehen und dieses Material auch nachhaltig produziert werden kann.

Als nachteilig für verschiedene Einsatzgebiete wird die geringere biologische Beständigkeit der Pflanzenfasern angesehen. Da die Ernte des Pflanzenmaterials nur saisonal erfolgt, sind außerdem für die Lagerung der Fasergrundstoffe Aufwendungen für Lagerung und entsprechende Logistik erforderlich. Ein gewisser Nachteil üblicher Pflanzenfasern besteht auch darin, dass ihre Abbauzeit in der freien Natur unter Umständen zu kurz ist.

Ziel der Erfindung ist der Einsatz eines Naturfaserstoffes in Geweben, Vliesen oder Matten, der ganzjährig gewinnbar, der biologisch unbedenklich und über lange Zeit weitestgehend biologisch resistent ist, der nach seiner Verwendung unbedenklich im Wasser und im Boden verbleiben, kompostiert oder einer anderen Verwendung zugeführt werden kann.

Vorliegende Erfindung schlägt vor, ein Gewebe, Vlies, Matte oder dergl. mit Xylit, insbesondere Faserxylit, herzustellen. Dabei kann das Vlies, Gewebe, die Matte oder dergl. völlig aus Faserxylit bestehen oder es werden nur bestimmte Xylitanteile mit anderen bekannten Faserbestandteilen zur Bildung des Vlies, Gewebe, der Matte oder dergl. eingesetzt. Dabei können einzelne Faserstoffe oder Beigaben für unterschiedliche Einsatzgebiete sowohl als separate Schichten in dem Gewebe, Vlies, der Matte ausgebildet sein, als auch als Mischungen unterschiedlicher Faserstoffe vorliegen oder es werden auch andere Materialien, z. B. Kunststoffe, dem Endprodukt beigemischt, um seine Struktur oder auch sein Oberflächenverhalten in eine gewünschte Richtung zu beeinflussen.

Braunkohlenxylit ist ein faseriger Bestandteil jungtertiärer Weichbraunkohlen. Er ist ein Naturstoff, der durch bio- und geophysikalische Abbau- und Umwandlungsreaktionen aus der Pflanzenmasse ehemaliger Moore innerhalb von etwa 15 bis 20 Millionen Jahre entstanden ist. Er fällt beim Abbau der Braunkohle insbesondere im Lausitzer Braunkohlenrevier langfristig ohne zusätzliche Inanspruchnahme von Ressourcen an und kann ohne ökologische Beanspruchung der Umwelt über eine spezielle Zerkleinerungs-/Klassiertechnologie aus der Braunkohle abgetrennt werden. Lausitzer Braunkohle enthält einen Anteil von etwa 5 bis 20 Vol.-% Faserxylit. Braunkohlenxylit kann zu unterschiedlichen Faserprodukten von langfasrig oder stänglig bis wattig aufgearbeitet werden.

Bislang wurde dieser Xylit u. a. zur Bodenverbesserung eingesetzt, indem der lose Xylit in den Boden als unstrukturiertes Material eingebracht wird oder den Boden bedeckt. Bei der Erfindung hingegen wird vorgeschlagen, die Xylitfaser als strukturiertes Material einzusetzen. Auch die Verwendung als Bodenbedeckungsplatte, fest verbunden mit natürlichen und künstlichen Klebstoffen, wie Stärke, Ton, Lehm, sowie als Basismaterial für hochwertige Brennstoffe, ist bekannt.

Bei der Erfindung hingegen wird vorgeschlagen, die Xylitfaser als strukturiertes Material einzusetzen. Durch geeignete Technologien, z. B. Verwebung, Versteppung, Verpressung, Verklebung (oder eine Kombination vorgenannter Bearbeitungen) durchaus geeignet ist, ein Vlies, Gewebe, Matte oder dgl. zu bilden.

Gegensätzlich zu den üblichen verwendeten Pflanzenfasern besitzt Xylit eine hohe Resistenz gegenüber biologischen Abbauerscheinungen (alle schnell abbaubaren Inhaltsstoffe der früheren Phytomasse (Pflanzen) wurden bereits während der Inkohlung chemisch abgebaut). Er zeichnet sich weiterhin durch eine hohe innere Porosität, sowie durch eine hohe Anzahl an Bindungspotentialen in seiner Struktur aus und eignet sich somit für die Adsorption von Wasser, Nährstoffen oder Schadstoffen. Die kurz- bis langfaserigen holzigen Bestandteile der Braunkohle besitzen eine hohe innere Porosität und bestehen hauptsächlich aus Huminen, Huminsäuren und Zellulosen. Insbesondere die bindungsaktiven Hydroxyl- und Carboxylgruppen sind in der Lage, Nährstoffe und Spurenelemente chemisch zu binden.

Der Faserxylit kann zu unterschiedlichen Faserprodukten aufgearbeitet werden, z. B. zu einem voluminösen, watteähnlichen, Stoff, der durch entsprechende Technologien, z. B. Verwebung, Versteppung, Verpressung, Verklebung (oder eine Kombination vorgenannter Bearbeitungen) geeignet ist, ein Vlies, Gewebe, eine Matte oder dergl. zu bilden.

Dabei kommt solchen Vliesen, Geweben, Matten oder Faschinen die besonders guten Eigenschaften des Xylits zugute, nämlich ein relativ hohes Speichervermögen für Wasser, da die Xylitfasern eine große innere Porosität sowie eine relativ große innere und äußere Oberfläche aufweisen. Diese inneren und äußeren Oberflächen haben eine vergleichbare Funktion wie ein Agglomerat, z. B. Kunststoffagglomerat (siehe EP 0 622 465). Das hat zur Folge, dass die einzelnen Fasern ein hohes Aufnahmevermögen für Nährstoffe und Spurenelemente haben, was dann in einem Vlies, Gewebe, einer Matte oder dergl. zur lang anhaltender Speicherung von beigesetzten Zusätzen, z. B. Spurenelementen, Dünger, Phospat, Nitrat usw. führen kann. Schließlich ist als eine gute Eigenschaft von Xylit neben dem hohen Wasserspeichervermögen aufgrund der Kohlebasis ein bedeutsames Adsorptionspotential für chemische Substanzen sowohl für Nährstoffe als auch für Schadstoffe zu nennen.

Xylitfasern enthalten die Kapillaren der ehemaligen Pflanzenfasern und begründen damit die hohe innere Porosität und spezifische Oberfläche. Die Xylitfasern sind dabei überwiegend makroporenhaltig. Durch die hohe innere Porosität und spezifische Oberfläche und wegen der chemischen Oberflächenbeschaffenheit bzw. Inhaltsstoffe kann Xylit Schadstoffe gut adsorbieren.

Eine der wesentlichen Eigenschaften des Faserxylits ist mithin die hohe spezifische Oberfläche der einzelnen Fasern, die um ein Deutliches über dem liegt, was vergleichbare Fasern (z. B. Holzwolle, Kokosfasern) aufweisen. Im Gegensatz zu üblicher Pflanzenfaser verrottet die Xylitfaser nicht in einer Saison wie Grün- oder Baumschnitt. Ohnehin werden mit der Erfindung weitestgehend Nutzungsarten vorgeschlagen, bei welchen die Xylitfaser vorwiegend unter anaeroben Bedingungen eingesetzt wird. Unter diesen Bedingungen existiert das Material seit Millionen von Jahren und bleibt daher auch sehr lange erhalten.

Viele der Eigenschaften von Xylit sind aus der Veröffentlichung "World of Mining - Surface & Underground" 56 (2004) No. 3, Seiten 187 bis 196, bekannt. Diese Veröffentlichung beschäftigt sich aber im Wesentlichen nur mit den physikalischen und chemischen Eigenschaften des Xylits als lose Rohfaser.

Vorliegende Erfindung hingegen stellt Xylit als strukturierten und für die Bearbeitung besonders aufbereiten Gewebestoff in einem Vlies, Gewebe, einer Matte oder dergl. vor, so dass ein solches Vlies, Gewebe, Matte oder dergl. zur Bildung von Ummantelungen von Dränagerohren, Matten für Erosionsschutz, Matten für den Garten- und Landschaftsbau, Dachbegrünungsmatten, Matten für die Ingenieurbiologie, Biofiltermaterial, Faschinen und schlauchartige Produkte eingesetzt werden kann.

Dabei ist erfindungsgemäß auch vorgesehen, dass der Xylit (ggf. in Mischung mit anderen Fasern) nicht nur als Rohmaterial zu einem Gewebe, Vlies, einer Matte oder einem Wattekörper oder dergl. weiterverarbeitet wird, sondern auch mit bestimmten Stoffen, seien es chemische und/oder biologische Zusatzstoffe versetzt werden kann, um dann im Einsatz eine Reaktion oder Abgabe dieser Zusatzstoffe mit ihrer Umgebung zu erlauben.

Zur Optimierung des erfindungsgemäßen Produkts ist es auch möglich, mehrere Schichtfolgen, z. B. in einfachster Sandwich-Bauweise aufeinander zu legen.

Die vorliegende Erfindung führt zu einem Produkt, das eine Depotwirkung entfaltet, für Wasser wie für Chemikalien (Dünger, Pestizide etc.). Mit dem Einsatz eines erfindungsgemäßen Produkts mit Xylit ist ein sorgsamer Umgang mit den Chemikalien und Kostenersparnis verbunden. Die besonders gute Langzeitwirkung des Xylits basiert neben den besonderen Stoffeigenschaften auf der Tatsache, dass Schadstoffe aufgenommen, gebunden und langfristig abgebaut werden, wobei andererseits Nährstoffe gespeichert und dosiert wieder abgegeben werden können.

Bei Einsatz der erfindungsgemäßen Gewebe für Dränrohre ist es möglich, dass entlang eines Dränagerohres die Dränagerohrumwicklung mit dem erfindungsgemäßen Material so dotiert ist, dass Einfluss auf den pH-Wert (Pufferung), das Redoxpotential, die Leitfähigkeit u.a.m. genommen werden kann.

Weitere bevorzugte Anwendungsformen für Xylitfasern seien nachfolgend skizziert.

Es kommt häufig vor, dass die Wurzeln von Bäumen insbesondere in ummantelte Dränrohre (Ringdränagen im Hausbau) hineinwachsen und somit das gesamte Rohr blockieren. Dieser Effekt ist dadurch zu erklären, dass Feinanteile in den Dränrohrfilter gelangen und den Wurzeln dadurch Nährstoff und Feuchtigkeit spenden und somit den Wurzeln einerseits und dem Baum andererseits optimales Wachstum verschaffen. Was gut für den Baum und seine Wurzeln ist, ist aber natürlich nicht gewünscht für die Dränrohre, denn diese werden durch die Wurzelblockade außer Funktion gesetzt und müssen dann sehr mühsam aus dem Erdboden herausgeholt werden.

Es ist auch schon vorgeschlagen worden, einen sog. Wurzellockstoff einzusetzen, mit dem die Wurzeln vom Dränrohr abgelenkt werden und in Richtung des Wurzellockstoffes - einem sog. Huminstoff - wachsen.

Erfindungsgemäß wird nunmehr vorgeschlagen, einen schlauchartigen Xylitfaserstrang (Faschine) auszubilden und diesen mit Huminstoff und/oder einem wasserspeichernden Polymer, z. B. Stockosorb, anzureichern. Von Vorteil dabei ist, dass Xylit bereits freie Huminsäuren von bis zu 20 Ma.-% enthält. Dieser schlauchartige Strang aus Xylitfaser wird in einem gewissen Abstand neben oder unter- oder oberhalb des Dränrohres gelegt. Dieser Strang wird mehr Feinanteile aufnehmen als das Dränrohr und kann zudem auch mehr Wasser speichern als das Dränrohr und wird daher eher die Wurzeln "anziehen" als das Dränrohr, so dass das Dränrohr unbeschädigt und voll funktionstüchtig bleibt, hingegen der Xylitfaserstrang früher oder später von den Wurzeln des Baumes durchsetzt wird. Wiederum ist es hierbei vorteilhaft, dass der Xylitfaserstrang durch die anaeroben Bedingungen sehr langsam verrottet und über Jahre hin im Boden verbleiben kann und seine gewünschte Funktion erfüllt. Grundsätzlich kann der Einsatz von Wurzellockstoffen bevorzugt durch Dotierung des Xylits mit entsprechenden Huminstoffen, erfolgen.

Wenn ein vorbeschriebener Xylitfaserstrang nunmehr im Bereich von Rad- und Fußwegen günstig verlegt wird, können auch Wurzelbeschädigungen solcher Rad- und Fußwege wirkungsvoll verhindert werden, wozu dann am besten der Xylitfaserstrang unterhalb der Wegelinie zwischen Baumbewuchs und Weg verlegt wird.

Außerdem wird erfindungsgemäß auch ein Vegetationsträger vorgeschlagen, der dadurch gekennzeichnet ist, dass die Vegetationsschicht aus Xylitfaser besteht. Diese Vegetationsschicht ist im Bedarfsfall ober- und unterseitig noch durch Armierungsgewebe und/oder einen Armierungsfaden fixiert.

Es ist auch möglich, dass der Vegetationsträger zu 100 % aus Xylitfaser besteht und lediglich durch einen Armierungsfaden fixiert ist.

Ein solcher erfindungsgemäßer Vegetationsträger aus Xylitfaser weist bevorzugt eine Grammatur von etwa 300 g/m² bis 3000 g/m² auf.

Es ist auch möglich, dass die Vegetationsträgerschicht nicht nur aus Xylitfaser allein besteht, sondern aus einem Fasergemisch aus Xylitfaser mit Xylit sowie Kokosfaser und/oder Hanf, Flachs- und Strohfasern besteht.

Weiterhin kann es auch vorteilhaft sein, dass die Vegetationsschicht nicht allein aus Xylitfaser besteht, sondern auch zu einem gewissen Bestandteil, z. B. bis zu 30 % bis 70 % Tierhaare oder andere Fraktionen anderer Pflanzenfasern enthält.

Schließlich kann es auch vorteilhaft sein, wenn der Vegetationsträger oberflächlich teilweise oder vollständig mit einer Folienabdeckung versehen ist.

Es ist auch möglich, dass der erfindungsgemäße Vegetationsträger als Faschine ausgebildet ist, die aus einer Xylitfaser besteht mit bevorzugt einer Ummantelung und einem Kernbereich, wobei durch die Ummantelung bis in den Kernbereichen Pflanzmulden eingearbeitet sind.

Die Verwendung von Xylitfasern in einem Vegetationsträger sei nachfolgend anhand eines in den Figuren dargestellten Beispiels weiter erläutert.
- Figur 1: zeigt den Querschnitt eines als vorkultivierbare Vegetationsmatte ausgestalteten Vegetationsträgers aus Xylitfaser.
- Figur 2: zeigt den Querschnitt eines als vorkultivierbare Vegetationsmatte ausgestalteten Vegetationsträgers aus in Sandwichbauweise zusammengefügten Faservliesen unterschiedlicher Herkunft, z. B Xylit und Kokosfaser.
- Figur 3: zeigt den Querschnitt eines als vorkultivierbare Vegetationsmatte ausgestalteten Vegetationsträgers aus einem Fasergemisch (Xylitfaser/Kokosfaser).
- Figur 4: zeigt einen Querschnitt eines Vegetationsträgers für den Gemüse- und Zierpflanzenbau.
- Figur 5: zeigt einen Querschnitt eines als Faschine für Uferbefestigungen ausgestalteten Vegetationsträgers. Diese bzw. entsprechend modifizierte Faschinen sind gleichfalls auch als Wurzellockstoff einsetzbar.

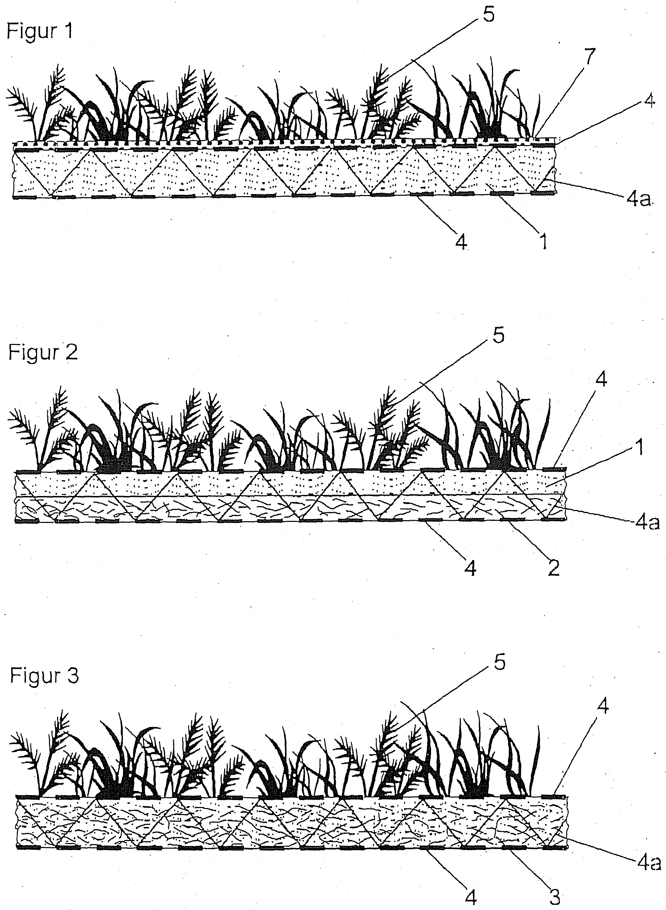

Figur 1 zeigt einen Vegetationsträger bestehend aus einem gelegten Xylitfaservlies (1) mit ober- und unterseitig verrottbarem Armierungsgewebe (4). Die Armierungsgewebe (4) werden durch einen als Armierungsfaden (4a) bezeichneten verrottbaren Steppfaden verbunden.

Der als Vegetationsmatte hergestellte Vegetationsträger kann in beliebigen Breiten und Längen hergestellt werden. Die Grammatur ist vom jeweiligen Verwendungszweck abhängig und kann zwischen 300 g/m² und 3000 g/m² betragen. Die Vegetationsmatte zeichnet sich durch ein entsprechend der Grammatur determiniertes günstiges Wasserspeichervermögen sowie durch das Pflanzenwachstum positiv beeinflussende pflanzenphysiologische Eigenschaften der Xylitfaser aus. In Gegenüberstellung zu Vegetationsmatten, die dem bekannten Stand der Technik entsprechen, entwickelt sich die z. B. für Dachbegrünungen bestimmte Vegetation (5) dynamischer und erreicht in kürzeren Zeiträumen einen verkaufsfähigen Deckungsgrad. Die Vorkultivierung des erfindungsgemäßen Vegetationsträgers im Rahmen einer Sprossenansaat kann durch Abstreuen mit einem Extensivsubstrat (7) in einer Dosierung von 2 l/m² bis 10 l/m² und der dadurch bewirkten Verbesserung des Mikroklimas im Vegetationsträger weiter beschleunigt werden.

In Figur 2 ist ein Vegetationsträger dargestellt, der aus einer in Sandwichbauweise zusammengefügten Vegetationsschicht besteht. Die obere Schicht besteht aus einem Xylitfaservlies (1) bzw. einer Xylitfaserschicht. Der Vegetationsträger ist kombiniert mit einem darunter liegenden Vlies aus Pflanzenfasern (2), das der Verbesserung der Durchlüftung und Dränage dient. Die Pflanzenfasern können z. B. als Kokos-, Hanf- oder Flachsfasern vorliegen. Die Grammaturen können zwischen 500 g/m² und 3000 g/m² betragen.

Der in Figur 3 dargestellte Vegetationsträger ist ebenfalls aus unterschiedlichen natürlichen Fasermaterialien zusammengesetzt. Hier werden die Faserkomponenten jedoch vor der Vlieslegung gemischt und liegen im Vegetationsträger als Mischvlies (3) vor. Das Mischvlies (3) kann aus 30 bis 70 % Xylitfaser und 30 % bis 70 % pflanzlichen Fasern, wie Kokosfaser, Flachsfaser oder Hanffaser bestehen.

Die in Figur 1 bis 3 dargestellten Vegetationsträger eignen sich insbesondere als vorkultivierbare Vegetationsmatten für die Begrünung ebener oder geneigter Bauwerksoberflächen. Des Weiteren eignen sie sich besonders für Anwendungen mit intensiver Bodennutzung, wie z. B. die Gemüseproduktion. Um eine Fruchtziehung oder einen hohen Vegetationsstand zu erreichen, bedarf es einer kontrollierten, aber ständigen Zufuhr von Düngemitteln und Energie. Mit den Düngemitteln werden der Pflanze Nährstoffe zugeführt. Zu viel zugeführte Nährstoffe können in den erfindungsgemäßen Vegetationsträgern gespeichert werden.

Besonders bevorzugt ist die Kombination der erfindungsgemäßen Vegetationsträger im Zusammenhang mit einem Dränagesystem, wobei das Dränagesystem wiederum bevorzugt ebenfalls aus erfindungsgemäßem Gewebe besteht. In dieser Kombination (Vegetationsmatte/Dränage) werden zu viel zugeführte Nährstoffe von dem im Boden eingebrachten Dränagesystem aufgefangen, so dass eine Überdüngung vermieden wird. Außerdem können die Nährstoffe dem direkten Düngeprozess wieder zugeführt werden. Damit regulieren die erfindungsgemäßen Xylit-Strukturen den Wasserhaushalt und den Nährstoffhaushalt. Andere Anwendungen mit intensiver Bodennutzung sind z. B. Rasenflächen für Sportereignisse, wie z. B. Golf-, Tennis- und Fußballplätze.

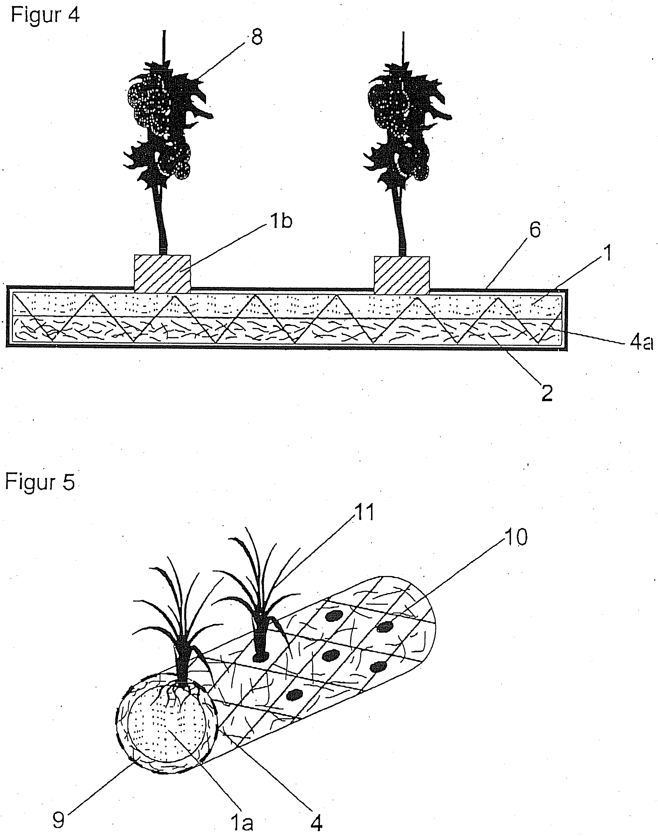

Figur 4 zeigt einen Vegetationsträger, der insbesondere für den Gewächshausanbau geeignet ist. Die Vegetationstragschicht ist beispielhaft in Sandwichbauweise (1, 2) dargestellt. Bei dieser Ausführungsform kann sich die Armierung des Vegetationsträgers auf ein grobmaschiges Vernähen mit einem Armierungsfaden (4a) beschränken, da Transporte von in Kultivierung befindlichen Vegetationsträgern nicht erforderlich sind. Der Vegetationsträger kann nach Vliesbildung und Vernähung in beliebigen Breiten und Längen entsprechend der jeweiligen Anforderungen der Gewächshauskulturen vorkonfektioniert werden. Im Interesse der Verringerung unerwünschter Evaporation ist es möglich, den Vegetationsträger oberflächlich mit einer die Verdunstung behindernden Folienabdeckung zu vernähen oder ihn vollflächig mit einer Folienumhüllung (6) zu versehen. Die in Anzuchtwürfeln vorkultivierten Kulturpflanzen (8) werden auf den Vegetationsträger aufgesetzt. Die Bewässerung erfolgt als Tröpfchenbewässerung über die Anzuchtwürfel. Die Wurzelmasse der Kulturpflanzen breitet sich über den Anzuchtwürfel (1 b), der beispielsweise aus Xylitfaservlies gefertigt ist, im gesamten Vegetationsträger aus und ist dank der günstigen Wachstumsbedingungen Grundlage für hohe Ertragsleistungen.

In Erweiterung des Erfindungsgedankens ist in Figur 5 eine als Faschine gestaltete Kokosrolle dargestellt, die in ihrem Kern mit Xylitfaser in Form des Stapelvlieses (1 a) gefüllt ist. Es hat sich gezeigt, dass in mit Xylitfaser gefüllten Faschinen die darin eingesetzten Pflanzen sich günstiger entwickeln und mit ihrer Wurzelmasse zu einer schnelleren Uferbefestigung beitragen. Die erfindungsgemäße Faschine eignet sich zur Vorkultivierung. Entsprechend dem z. B. bei der Uferbefestigung vorliegenden Profil werden in die Faschine Pflanzmulden (10) eingearbeitet, in die das gewünschte Pflanzenmaterial, z. B. Uferpflanzen (11), eingesetzt und vorkultiviert werden kann. Die im kompakt eingearbeiteten Xylitfaservlies wirkenden Kapillarkräfte gewährleisten eine im Faschinenquerschnitt ausreichende Wasserversorgung und begünstigen somit eine den gesamten Faschinenquerschnitt erfassende Durchwurzelung.

Ein weiterer Einsatz von Xylit, bevorzugt aber als Xylitstaub (Xylit-Feinanteile), sei als weiterer Erfindungsaspekt beschrieben.

Für die quasi industrielle Produktion von Gemüsepflanzen, wie z. B. Tomaten, Gurken, und von Blumen, wie z. B. Rosen usw. wird regelmäßig Steinwolle als Kultursubstrat eingesetzt. Der Vorteil der Steinwolle ist, dass sie stets gleich bleibt und durch den gezielten Zusatz von Nährstoffen und Wasser ein ideales Pflanzenwachstum erreicht werden kann. Es gibt auch Ersatzstoffe für die Steinwolle, z. B. Kokosfaserprodukte, wobei vor allem die Feinanteile der Kokosfaserproduktion zu Kokossubstratplatten verpresst werden und unter Hinzugabe von Wasser das Substrat in einem Plastikbeutel ("Growbag") aufquillt und in diesen aufgequollenen Körper dann die Tomate, Gurken, Rosen, also die Pflanzen hineingesetzt oder gesät werden.

Auch die bislang in Einsatz befindliche Steinwolle hat nicht nur Vorteile, sondern insbesondere Nachteile bei ihrer Entsorgung und außerdem bedarf es für die Steinwolleproduktion eines sehr hohen Energieeinsatzes. Durch die steigenden Energiepreise wird die Steinwolle immer teurer. Hierzu muss man wissen, dass für die Produktion von Steinwolle Basaltsteine geschmolzen werden müssen.

Als Substitut für die Steinwolle eignet sich zwar, wie beschrieben, der Kokosfaserstaub schon ganz gut, allerdings ist in Kokos(faser) ein recht hoher Salzgehalt enthalten und das kann ein Problem für bestimmte Pflanzenarten darstellen. Außerdem schwankt regelmäßig die Qualität des Kokosfaserstaubes, was im Vergleich zur stets gleich bleibenden Steinwolle ein echter Nachteil ist. Steinwolle ist nämlich ein ganz neutrales Kultursubstrat und gewährleistet somit immer eine gleichbleibende Qualität der Pflanzen.

Erfindungsgemäß wird nun auch vorgeschlagen, (eine Mischung aus) Xylitstaub bzw. Kokosfaserfeinanteilen für einen "Growbag" (Plastikkörper mit Kunststofffolie umhüllt) einzusetzen. Xylitfaserstaub ist salzfrei und der hohe Gehalt an Humin ist zudem wachstumsfördernd. Ferner ist aufgrund des hohen Alters der Xylitfaser die Qualität im Vergleich zum Kokosfaserstaub konstanter.

Erfindungsgemäß wird also vorgeschlagen, entweder die Feinanteile bzw. den Kokosfaserstaub ganz durch Xylitfaser bzw. Xylitstaub zu ersetzen oder eine Mischung von Xylitfaser/Kokosfaserstaub bzw. Xylitstaub und Kokosfaser oder Xylitstaub und Kokosfaserstaub bereitzustellen. Da Xylitstaub in hohem Maße bei der Xylitverarbeitung anfällt, handelt es sich dabei um einen sehr günstigen Grundausgangsstoff.

Wenn vorstehend von Xylitstaub die Rede ist, dann sind damit die Fein- und Feinstanteile im Xylit gemeint, die nicht mehr als Xylitfaser angesehen und verarbeitet werden können. Hierbei handelt es sich vornehmlich um Bestandteile, die regelmäßig (zu über 80 % oder ganz) eine geringere Länge als 5 cm bzw. 3 cm aufweisen bis zu echten staubkorngroßen Teilen.

Eine weitere erfindungsgemäße Idee besteht darin, die Feinanteile der Xylitfaserproduktion auch als Grundstoff für die Anspritzbegrünung zu verwenden. Bei der Anspritzbegrünung wird das Substrat mit einem Kleber und Saatgut vermischt und dann auf eine Rohbodenböschung aufgespritzt. Im Bereich der Böschungsbegrünung wird dieses Verfahren sehr häufig angewendet, da es die preiswerteste Form der Begrünungshilfe darstellt. Wenn nunmehr also die Feinanteile, unter Umständen auch vermischt mit Faseranteilen der Xylitfaser verklebt und zusammen mit Saatgut vermischt werden, so kann mit dem Xylitsubstrat sehr einfach und kostengünstig eine Begrünung durchgeführt werden.

Der Anteil der Xylitfaser zu den Xylitfaserfeinanteilen (Xylitstaub) kann dabei variieren und es kann sowohl reine Xylitfaser ohne Xylitstaub als auch nur Xylitstaub ohne Faseranteile eingesetzt werden, wie auch alle Mischungen der Mischungsfraktionen von Xylitfeinanteilen (Xylitstaub) mit Xylitfaser.

## Patentansprüche

1. Gewebe, Vlies, Matte, Wattekörper, Faschine, geformte Körper, Fäden, Garne, Seile oder schlauchartige Formkörper aus und/oder mit einem Bestandteil Xylitfasern, wobei dann, wenn nur ein Bestandteil aus braunkohlestämmigen Xylitfasern vorliegt, die übrigen Bestandteile natürlich abbaubare Bestandteile sind, z.B. Pflanzenfasern, wie Flachs, Stroh, Hanf, Kokos, Holz, wobei die Xylitfasern eine größere Länge als 3 cm aufweisen.

2. Vegetationsträger, bestehend aus einem Xylitfaservlies nach Anspruch 1, mit einem ober- und unterseitig verrottbarem Armierungsgewebe.

3. Vegetationsmatte nach Anspruch 2, **dadurch gekennzeichnet, dass** die Grammatur der Vegetationsmatte zwischen 300 g/m² und 3000 g/m² liegt.

4. Vegetationsmatte nach Anspruch 2, wobei der Vegetationsträger aus in Sandwichbauweise zusammengefügten Vegetationsschichten besteht, wobei eine obere und eine untere Schicht gebildet wird und die obere Schicht aus einem Xylitfaservlies besteht und die darunter liegende Schicht aus einem Vlies aus Pflanzenfasern gebildet ist.

5. Vegetationsmatte nach einem der vorliegenden Ansprüche, **dadurch gekennzeichnet, dass** der Vegetationsträger aus unterschiedlichen Fasermaterialien zusammengesetzt ist und als Mischvlies vorliegt, wobei das Mischvlies aus 30% bis 70% aus Xylitfasern und 30% bis 70% aus pflanzlichen Fasern besteht.

6. Gewebe, Vlies, Matte, Wattekörper, Faschine, Fäden, Garne, Seile oder schlauchartige Formkörper nach Anspruch 1,
**dadurch gekennzeichnet, dass** der Anteil der braunkohlenstämmigen Fasern im gesamten Gewebe zwischen 1 % und 100 % beträgt, vorzugsweise 10 % bis 70 % beträgt.

7. Gewebe, Vlies, Matte, Wattekörper, Faschine, Fäden, Garne, Seile oder schlauchartige Formkörper nach Anspruch 1,
**dadurch gekennzeichnet, dass** das Vlies bzw. Gewebe verwebt ist bzw. gesteppt ist oder auf andere Art und Weise zusammengehalten wird.

8. Gewebe, Vlies, Matte, Wattekörper, Faschine, Fäden, Garne, Seile oder schlauchartige Formkörper nach Anspruch 1 bis 7,
**dadurch gekennzeichnet, dass** Additive zugesetzt werden bzw. dass sie Nährstoffe (z. B. Düngemittel), zugefügte Huminstoffe und/oder Wasser speicherndes Polymer umfassen.

9. Verwendung von braunkohlenstämmigen Faserstoffen nach Anspruch 1 bis 8 in einem oder mehreren der folgenden Anwendungsgebiete:
- Dränagerohr-Ummantelungen ohne und mit Konditionierung,
- Erosionsschutz
- Garten- und Landschaftsbau , z. B. für Mulchescheiben; Töpfe (Korpus); Pflanzenhochstämme; Vegetationsträger; Faschinen
- Dachbegrünung
- Ingenieurbiologie und Umweltschutztechnik (Biofilter, Naturfilter, Stoff zur Schadstoffreduzierung)
- Bauindustrie (Wurzelfänger; Dämmstoff).

## Claims

1. Woven fabric, non-woven fabric, mat, wadding, fascine, shaped members, threads, yarns, cables or tubular shaped members comprising and/or having a component xylitol fibres, wherein, when only one component of xylitol fibres of brown coal origin is present, the remaining components are naturally degradable components, for example, plant fibres, such as flax, straw, hemp, coconut, wood, wherein the xylitol fibres have a length greater than 3 cm.

2. Vegetation carrier, comprising a xylitol fibre non-woven fabric according to claim 1, having a reinforcement woven fabric which can decompose at the upper and lower side.

3. Vegetation mat according to claim 2, **characterised in that** the grammage of the vegetation mat is between 300 g/m² and 3000 g/m².

4. Vegetation mat according to claim 2, wherein the vegetation carrier comprises vegetation layers which are assembled in a sandwich-like construction, wherein an upper layer and a lower layer are formed and the upper layer comprises a xylitol fibre non-woven fabric and the layer below is formed from a non-woven fabric of plant fibres.

5. Vegetation mat according to any one of the preceding claims, **characterised in that** the vegetation carrier is composed of different fibre materials and is present as a mixed non-woven fabric, wherein the mixed non-woven fabric comprises from 30% to 70% of xylitol fibres and from 30% to 70% of plant fibres.

6. Woven fabric, non-woven fabric, mat, wadding, fascine, threads, yarns, cables or tubular shaped members according to claim 1, **characterised in that** the proportion of the fibres of brown coal origin in the entire woven fabric is between 1% and 100%, preferably from 10% to 70%.

7. Woven fabric, non-woven fabric, mat, wadding, fascine, threads, yarns, cables or tubular shaped members according to claim 1, **characterised in that** the non-woven fabric or woven fabric is interwoven or stitched or held together in a different manner.

8. Woven fabric, non-woven fabric, mat, wadding, fascine, threads, yarns, cables or tubular shaped members according to claim 1 to claim 7,
**characterised in that** additives are added or **in that** they comprise nutrients (for example, fertilisers), added humic substances and/or water-retaining polymer.

9. Use of fibre materials of brown coal origin according to claims 1 to 8 in one or more of the following application fields:
- drainage pipe covers without and with conditioning,
- erosion protection,
- garden and landscaping construction, for example, for mulch panels; pots (corpus); high-stem plants; vegetation carriers, fascines,
- roof greening,
- bioengineering and environmental protection technology (biofilters, natural filters, material for reducing pollutants),
- construction industry (root catchers, insulation).

## Revendications

1. Tissu, étoffe, tapis, corps d'ouate, fascine, corps moulé, filaments, fils, câbles ou corps moulé de type tuyau flexible constitués de et/ou contenant un composant de fibres de xylite, dans lesquels, lorsqu'il ne se trouve qu'un composant en fibres de xylite provenant du lignite, les autres composants sont des composants naturellement dégradables, par exemple des fibres végétales, comme le lin, la paille, le chanvre, le coco, le bois, dans lesquels les fibres de xylite présentent une longueur supérieure à 3 cm.

2. Support de végétation, se composant d'une étoffe de fibres de xylite selon la revendication 1, avec un tissu de renforcement putrescible sur le côté supérieur et inférieur.

3. Tapis de végétation selon la revendication 2, **caractérisé en ce que** le grammage du tapis de végétation se situe entre 300 g/m² et 3000 g/m².

4. Tapis de végétation selon la revendication 2, dans lequel le support de végétation se compose de couches de végétation assemblées à la façon d'un sandwich, dans lequel une couche supérieure et une couche inférieure sont formées et la couche supérieure se compose d'une étoffe en fibres de xylite et la couche sous-jacente est formée d'une étoffe de fibres végétales.

5. Tapis de végétation selon l'une quelconque des revendications précédentes, **caractérisé en ce que** le support de végétation est composé de différents matériaux fibreux et se présente sous la forme d'une étoffe mixte, dans lequel l'étoffe mixte se compose de 30 % à 70 % de fibres de xylite et de 30 % à 70 % de fibres végétales.

6. Tissu, étoffe, tapis, corps d'ouate, fascine, filaments, fils, câbles ou corps moulés de type tuyau flexible selon la revendication 1, **caractérisés en ce que** la proportion de fibres provenant du lignite dans tout le tissu vaut entre 1 % et 100 %, de préférence de 10 % à 70 %.

7. Tissu, étoffe, tapis, corps d'ouate, fascine, filaments, fils, câbles ou corps moulés de type tuyau flexible selon la revendication 1, **caractérisés en ce que** l'étoffe ou le tissu est entrelacé(e) ou piqué(e) ou solidarisé(e) d'une autre manière.

8. Tissu, étoffe, tapis, corps d'ouate, fascine, filaments, fils, câbles ou corps moulés de type tuyau flexible selon une revendication 1 à 7, **caractérisés en ce que** des additifs sont ajoutés ou **en ce qu'**ils contiennent des éléments nutritifs (par exemple de l'engrais), des humines ajoutées et/ou un polymère accumulant de l'eau.

9. Utilisation de substances fibreuses provenant du lignite selon une revendication 1 à 8 dans un ou plusieurs des domaines d'application suivants:
- gaines de tuyaux de drainage sans et avec conditionnement,
- protection contre l'érosion,
- aménagement de jardins et de paysages, par exemple pour des plaques de paillage; pots (corps); plantes haute-tige; supports de végétation; fascines),
- création de toitures vertes,
- biologie de l'ingénieur et technique de protection de l'environnement (biofiltres, filtres naturels, substances permettant de réduire les polluants),
- industrie de la construction (destructeur de racines; matériau d'isolation).
